(19) Europäisches Patentamt
European Patent Office
Office européen des brevets

(11) **EP 3 297 345 B1**

(12) **EUROPEAN PATENT SPECIFICATION**

(45) Date of publication and mention
of the grant of the patent:
**26.01.2022 Bulletin 2022/04**

(21) Application number: **17190763.7**

(22) Date of filing: **13.09.2017**

(51) International Patent Classification (IPC):
***H04W 64/00*** (2009.01)       ***G01S 5/02*** (2010.01)
*G01S 11/06* (2006.01)

(52) Cooperative Patent Classification (CPC):
**H04W 64/003; G01S 5/0284;** G01S 11/06;
H04W 64/00

(54) **WIRELESS LOCAL AREA NETWORK BASED POSITIONING METHOD AND DEVICE**

AUF DRAHTLOSEM LOKALEM NETZWERK BASIERENDES POSITIONIERUNGSVERFAHREN UND VORRICHTUNG

PROCÉDÉ ET DISPOSITIF DE POSITIONNEMENT BASÉ SUR UN RÉSEAU LOCAL SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.09.2016 CN 201610828809**

(43) Date of publication of application:
**21.03.2018 Bulletin 2018/12**

(73) Proprietor: **Beijing Xiaomi Mobile Software Co., Ltd.**
**Beijing 100085 (CN)**

(72) Inventors:
• **LIU, Jia**
**Beijing, Beijing 100085 (CN)**
• **LIN, Li**
**Beijing, Beijing 100085 (CN)**
• **ZHAO, Ziqiang**
**Beijing, Beijing 100085 (CN)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(56) References cited:
**WO-A1-2015/143847     US-A1- 2013 053 061**

EP 3 297 345 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**TECHNICAL FIELD**

The present disclosure relates to the field of positioning technology, and more particularly, to a wireless local area network based positioning method and device as well as a computer program and a recording medium.

**BACKFLOOR**

With the development of computer and network communication technologies, intelligent devices such as wireless sockets, air purifiers, water purifiers and so on gradually rise. Often multiple intelligent devices are deployed in a room, so there is a need to positioning these intelligent devices so as to perform separate control and management on them, which provides the indoor positioning technology a broad space for development. With extensive deployment and popularization of wireless local area network (WLAN), WLAN based indoor positioning technology has been a research hot spot in the field of indoor positioning technology in recent years.

In the related art, positioning of an indoor intelligent device is implemented by measuring strength of wireless signals received by an intelligent device, that is, Received Signal Strength Indicator (RSSI) information, estimating distance between an access point (AP) at wireless signal transmitter side and the intelligent device by using an empirical formula between signal strength and distance, and determine location of the intelligent device according to the estimated distance.

US 2013/053061 A1 (KANG MIN SEOK [KR] ET AL) 28 February 2013 discloses a localization system including terminals and a server.

**SUMMARY**

According to a first aspect of the invention, there is provided a wireless local area network based positioning method implemented in a routing device as defined by independent claim 1.

According to a second aspect of the invention, there is provided a wireless local area network based positioning device as defined independent claim 6.

According to a third aspect of the invention, there is provided a computer program as defined by independent claim 11.

According to a fourth aspect of the invention, there is provided a recording medium readable by a computer as defined by independent claim 12.

It is to be understood that both the foregoing general descriptions and the following detailed descriptions are exemplary and explanatory only and do not limit the scope of the disclosure.

**BRIEF DESCRIPTION OF THE DRAWINGS**

The drawings herein are incorporated in and constitute a part of this specification, showing embodiments consistent with the present disclosure, and together with the descriptions, serve to explain the principles of the present disclosure.

Figure 1 is a flow chart of a WLAN based positioning method in accordance with an exemplary embodiment;
Figure 2 is schematic diagram illustrating an environment in which a WLAN based positioning method in accordance with the present disclosure can be implemented;
Figure 3 is a flow chart of a WLAN based positioning method in accordance with an exemplary embodiment;
Figure 4 is a schematic diagram illustrating a relative location map in accordance with an exemplary embodiment;
Figure 5 is a block diagram of a WLAN based positioning device in accordance with an exemplary embodiment;
Figure 6 is a block diagram of a positioning module 504 in accordance with an exemplary embodiment;
Figure 7 is a block diagram of a positioning module 504 in accordance with an example not covered by the claims; and
Figure 8 is a block diagram of a routing device 800 in accordance with an exemplary embodiment.

**DETAILED DESCRIPTION**

Hereinafter, exemplary embodiments will be described in detail, examples of which are shown in the drawings. In the following descriptions when referring to the drawings, the same numerals in the different drawings denote the same or similar elements unless otherwise indicated. The embodiments described in the following exemplary embodiments are not representative of all embodiments consistent with the present disclosure. Rather, they are merely examples of apparatuses and methods consistent with some aspects of the present disclosure as detailed in the appended claims.

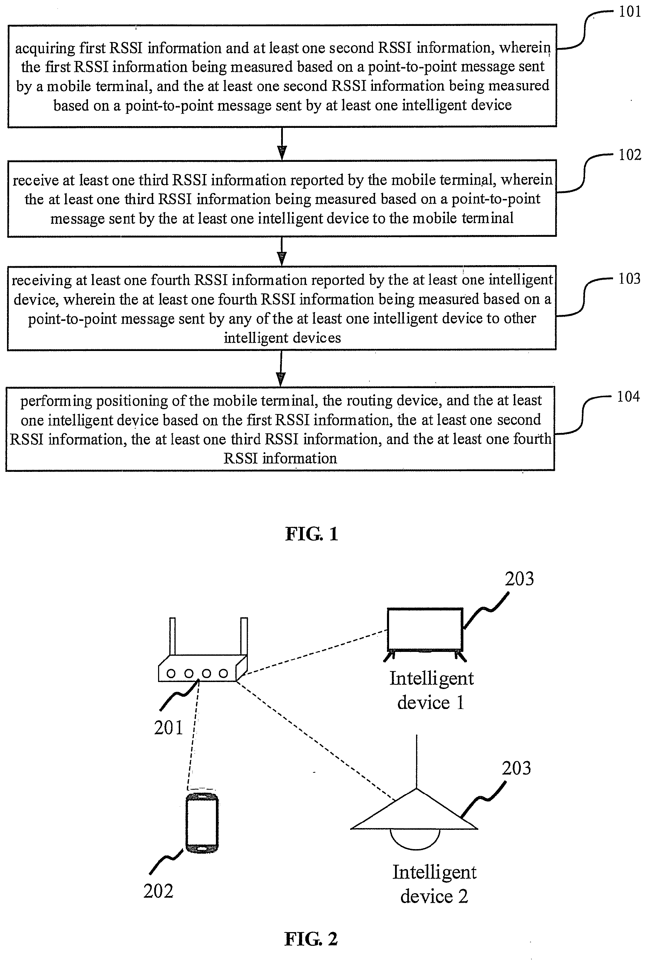

Figure 1 is a flow chart of a WLAN based positioning method in accordance with an exemplary embodiment. As shown in Figure 1, the WLAN based positioning method is used in a routing device. The method including the following steps.

At step 101, first Received Signal Strength Indicator (RSSI) information and at least two second RSSI information are acquired. The first RSSI information is measured based on a point-to-point message sent by a mobile terminal to the routing device, and the at least two second RSSI information are measured based on a point-to-point message sent by each of the at least two intelligent devices to the routing device.

At step 102, at least two third RSSI information reported by the mobile terminal are received. The at least two third RSSI information are measured based on a point-to-point message sent by each of the at least two intelligent devices to the mobile terminal.

At step 103, at least one fourth RSSI information reported by any one of the at least two intelligent devices is received. The at least one fourth RSSI information is measured based on a point-to-point message sent by any one of the at least two intelligent devices to the other intelligent device of the at least two intelligent devices.

At step 104, positioning of the mobile terminal, the routing device, and the at least two intelligent devices is performed based on the first RSSI information, the at least two second RSSI information, the at least two third RSSI information, and the at least one fourth RSSI information.

With the method provided by the present embodiment, it is able to implement positioning based on distance between every two devices to be positioned with high accuracy by collecting RSSI information of a point-to-point messages between every two devices to be positioned, which represents distance between the devices to be positioned.

In the present invention, the performing positioning of the mobile terminal, the routing device, and the at least two intelligent devices based on the first RSSI information, the at least two second RSSI information, the at least two third RSSI information, and the at least one fourth RSSI information includes:
deriving a relative location map based on the first RSSI information, the at least two second RSSI information, the at least two third RSSI information, and the at least one fourth RSSI information, and transmitting the relative location map to the mobile terminal, wherein the relative location map indicates relative position between the mobile terminal, the routing device, and the at least two intelligent devices.

In some embodiments, the deriving of a relative location map based on the first RSSI information, the at least two second RSSI information, the at least two third RSSI information, and the at least one fourth RSSI information may include: determining a first distance between the routing device and the mobile terminal based on the first RSSI information, wherein any point on a first circle being

the location of the mobile terminal, center of the first circle being location of the routing device, and radius of the first circle being the first distance; determining at least two second distances between the routing device and the at least two intelligent devices based on the at least two second RSSI information and determining at least two third distances between the mobile terminal and the at least two intelligent devices based on the at least two third RSSI information, wherein at least two intersections of at least two second circles and at least two third circles being possible locations of the at least two intelligent devices,
center of each of the at least two second circles being location of the routing device, radius of each of the at least two second circles being respective one of the at least two second distances, center of each of the at least two third circles being location of the mobile terminal and radius of each of the at least two third circles being respective one of the at least two third distances.

In some embodiments, the method may further include: determining relative position of an intelligent device to another intelligent device among the at least two intelligent devices according to the relative location map and based on the fourth RSSI information.

In some embodiments, the method may further include: acquiring fifth RSSI information when a new intelligent device appears, wherein the fifth RSSI information being measured based on a point-to-point message sent by the new intelligent device; receiving sixth RSSI information reported by the mobile terminal, wherein the sixth RSSI information being measured based on a point-to-point message sent by the new intelligent device to the mobile terminal; receiving at least one seventh RSSI information reported by the new intelligent device, wherein the at least one seventh RSSI information being measured based a point-to-point message sent by any one of the at least two intelligent devices to the new intelligent device; and performing positioning based on the fifth RSSI information, the sixth RSSI information, the at least one seventh RSSI information, and a last positioning process.

In some embodiments, the performing positioning based on the fifth RSSI information, the sixth RSSI information, the at least one seventh RSSI information, and a last positioning process may include: performing positioning of the new intelligent device based on the fifth RSSI information, the sixth RSSI information, the at least one seventh RSSI information, and positioning result of the last positioning process; or performing positioning of the mobile terminal, the routing device, the at least two intelligent devices and the new intelligent device based on the fifth RSSI information, the sixth RSSI information, the at least one seventh RSSI information, and positioning data acquired in the last positioning process.

All of the alternative solutions described above may be combined in any way to form alternative embodiments of the present disclosure and will not be described again herein.

Figure 2 is schematic diagram illustrating an environment in which a WLAN based positioning method in accordance with the present disclosure can be implemented. As shown in Figure. 2, the implementation environment includes: a routing device 201, a mobile terminal 202, and at least two intelligent devices 203 (only two intelligent devices, that is, intelligent device 1 and intelligent device 2, are illustrated as an example).

The routing device 201 may be a wireless router set in a local area network or any other intermediate device for network access.

The mobile terminal 202 may be a mobile terminal such as a smart phone, a smart hand ring, a tablet computer, a remote controller, or the like. The mobile terminal 202 may have a routing device management application (APP) installed for triggering and monitoring drawing of a relative location map by the routing device and for presenting the relative location map. The mobile terminal may access the routing device to connect to a network and transmit data to the routing device.

The intelligent device 203 may be a smart home device such as a wireless socket, an air purifier, a smart TV, an intelligent light, and the like, which may access the routing device to connect to the network and transmit data to the routing device.

In embodiments of the present disclosure, if the mobile terminal 202 and the intelligent devices 203 are connected to the same routing device, the mobile terminal 202 and the intelligent devices 203 belong to the same Basic Service Set (BSS). Tunneled Direct Link Setup (TDLS) can be established between intelligent devices (such as intelligent device 1 and intelligent device 2) and between each of the intelligent devices (such as intelligent device 1 or intelligent device 2) and the mobile terminal in the same BSS, such that the mobile terminal is able to issue a control command to the intelligent devices through the tunnel, which communicates data between the intelligent devices and between the intelligent devices and the mobile terminal. The data can be transmitted over a point-to-point message.

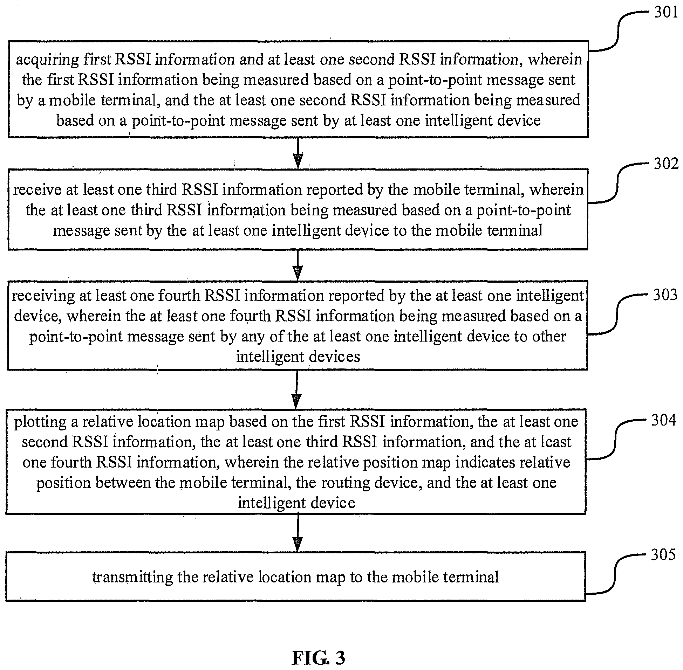

Figure 3 is a flow chart of a WLAN based positioning method according to an exemplary embodiment. As shown in Figure 3, the WLAN based positioning method can be used in a routing device. The method includes the following steps.

At step 301, first RSSI information and at least two second RSSI information are acquired. The first RSSI information is measured based on a point-to-point message sent by a mobile terminal, and the at least two second RSSI information are measured based on point-to-point messages sent by each of the at least two intelligent devices.

Because a message will be attenuated during propagation from a sender to a receiver, distance between the sender and the receiver can be obtained by measuring RSSI information contained in the message received at the receiver. In the present embodiment, in order to determine distance between every two devices to be positioned, it is necessary to obtain RSSI information of a point-to-point message between every two devices to be positioned.

In the step 301, the routing device receives a point-to-point message sent by a mobile terminal to the routing device, measures RSSI information of the message to obtain first RRSI information. In a similar way, the routing device receives a point-to-point message sent by each of the at least two intelligent devices to the routing device, measures RSSI information of the message to obtain the at least two second RRSI information.

In the present embodiment, the positioning process may be triggered by a user on the mobile terminal such that the mobile terminal sends a positioning request to the routing device. Upon reception of the positioning request, the routing device starts to execute the steps 301 to 305.

At step 302, at least two third RSSI information reported by the mobile terminal pare received. The at least two third RSSI information are measured based on a point-to-point message sent by each of the at least two intelligent devices to the mobile terminal.

In a similar way as in the step 301, the mobile terminal receives a point-to-point message sent by each of the at least two intelligent devices to the mobile terminal, obtain the at least two third RSSI information by measuring RSSI information contained in the messages, and report the at least two third RSSI information to the routing device, so that the routing device can receive the at least two third RSSI messages.

At step 303, at least one fourth RSSI information reported by the at least one intelligent device is received. The at least one fourth RSSI information is measured based on a point-to-point message sent by any one of the at least two intelligent devices to other intelligent devices of the at least two intelligent devices.

A point-to-point message may be transmitted between intelligent devices. For example, any one of the at least two intelligent devices may send a point-to-point message to the other intelligent devices of the at least two intelligent devices so as to obtain the at least one fourth RSSI information by measurement. Taking an intelligent device (intelligent device 1) as an example, the intelligent device 1 can receive a point-to-point message sent by the intelligent device 2, obtain RSSI information according to the message, and report the RSSI information to the routing device. Similarly, the intelligent device 2 can also report RSSI information of a point-to-point message sent by the intelligent device 1 to the routing device. Then, the routing device can receive two RSSI information reported by the two intelligent devices.

At step 304, a relative positioning map is plotted based on the first RSSI information, the at least two second RSSI information, the at least two third RSSI information, and the at least one fourth RSSI information. The relative positioning map is used for indicating relative position between the mobile terminal, the routing device, and the at least two intelligent devices.

Based on the RSSI information received at the step 301 to step 303, a relative location map can be plotted among the mobile terminal, the routing device, and the at least two intelligent devices. The process of plotting the relative location map may include the following two steps A and B.

A: a first distance between the routing device and the mobile terminal is determined based on the first RSSI information, wherein any point on a first circle being possible locations of the mobile terminal, center of first circle being location of the routing device, and radius of the first circle being the first distance.

The first distance determined in step A does not actually contain indication of any direction, so the mobile terminal may be located in any direction away from the routing device. Thus, it is possible to determine a first circle, any point on which is a possible location of the mobile terminal.

The first circle can be displayed in the relative location map.

B: at least two second distances between the routing device and the at least two intelligent devices are determined based on the at least two second RSSI information, and at least two third distances between the mobile terminal and the at least two intelligent devices based on the at least two third RSSI information, wherein at least two intersections of at least two second circles and at least two third circles being possible locations of the at least two intelligent devices, center of each of the at least two second circles being location of the routing device, radius of each of the at least two second circles being respective one of the at least two second distances, center of each of the at least two third circles being location of the mobile terminal and radius of each of the at least two third circles being respective one of the at least two third distances.

Based on the distance between the routing device and the intelligent device, location of the intelligent device can be determined on a circle with the routing device being its center. Based on the distance between the mobile terminal and the intelligent device, location of the intelligent device can be determined on a circle with the mobile device being its center. Thus, an intersection of these two circles can be obtained as a possible location of the intelligent device.

According to steps A and B, a relative location map among the devices to be positioned can be obtained based on the first circle, the at least two second circles, the at least two third circles and locations of the routing device, the mobile terminal and the at least two intelligent devices in these circles. The relative location map may show several points at which the devices to be positioned are located, or may show the circles and have several points marked on the circles to indicate positions of the devices to be positioned. Different devices on the relative location map can be expressed by points with different colors, and different circles may be expressed in different colors in order to be distinguished with each other.

In the present embodiment, it is possible to determine the distance between the devices to be positioned based on the RSSI information by the following formula:

$$20 \cdot \log (d[km]) = |\,RSSI\,| - 7.44 - 20 \cdot \log (f[MHz])$$

where d is a communication distance, f is operation frequency of an electromagnetic wave.

The formula may be derived as follows.

In an ideal condition (i.e. propagation in a free space), the wireless communication distance can be obtained by the formula: ideal transmission loss (dB) = 32.44 + 20 · log (d[(km]) + 20 · log (f[(MHz]), where the ideal transmission loss= transmission power - reception sensitivity, d is communication distance, f is operation frequency of an electromagnetic wave. Thus, in the ideal condition, the communication distance d is related with only the transmission power, the reception sensitivity and the operation frequency f.

In practical applications, wireless communication is affected by various external factors, such as atmosphere, obstructions and multipath and the like, which may cause losses. Assuming that an empirical value of the losses is 25dB, the wireless communication distance thus is: the ideal transmission loss (dB) + 25 = 32.44 + 20 · log (d[(km]) + 20 · log (f[(MHz]).

In the present embodiment, |RSSI| may be used as losses during signal transmission, so |RSSI| + 25 = 32.44 + 20 · log (d[(km]) + 20 · log (f[(MHz]). That is, 20 · log (d[(km]) = |RSSI| - 7.44 20 · log (f[(MHz]).

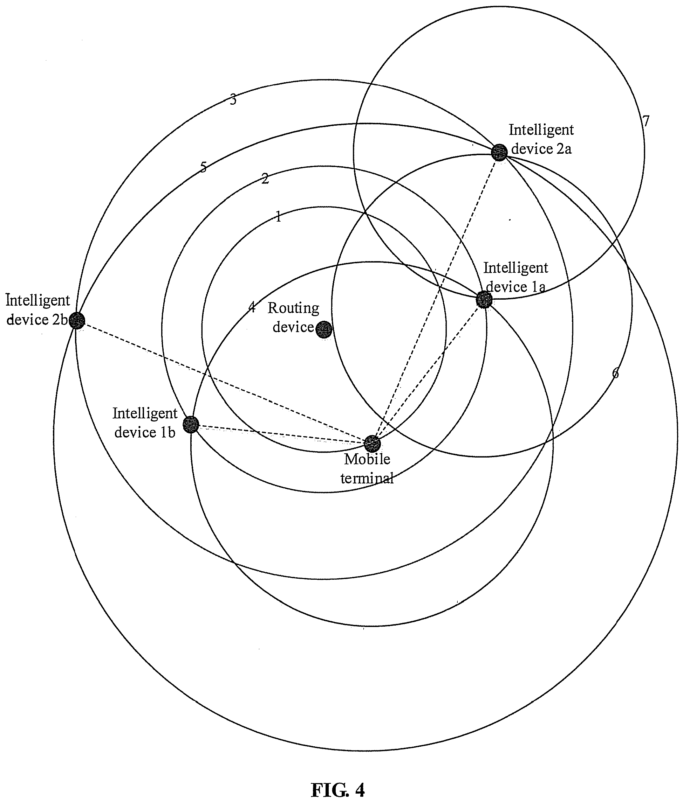

In the steps 301 to 304, the distance between the respective devices is obtained based on the RSSI information received between the devices, and the relative location map among the devices is obtained according to the distances. Taking a routing device, a mobile terminal and two intelligent devices (intelligent device 1 and intelligent device 2) as an example, a relative location map among the routing device, the mobile terminal and the two intelligent devices can be obtained according to the step 301 to step 304, see Figure 4, which is a schematic diagram of a relative location map according to an exemplary embodiment.

In Figure 4, the circle 1 to circle 3 are circles plotted based on distances between the routing device and the mobile terminal, the intelligent device 1 and the intelligent device 2 (which are determined by using a formula according to RSSI information of point-to-point messages received by the routing device from the mobile terminal, the intelligent device 1 and the intelligent device 2). The distances are used for radius of respective circles, and the location of the routing device is used for the center of respective circles.

The circle 4 and circle 5 are circles plotted based on distances between the mobile terminal and the intelligent device 1 and the intelligent device 2 (which are determined by using a formula according to RSSI information of point-to-point messages received by the mobile terminal from the intelligent device 1 and the intelligent device 2). The distances are used for radius of respective circles, and the location of the mobile terminal is used for the center of respective circles.

The intersections of the circle 2 and the circle 4 can be used to simply deduce a possible position of the intelligent device 1, i.e. the intelligent device 1a/the intelligent device 1b. The intersections of the circle 3 and the circle 5 can be used to simply deduce possible position of the intelligent device 2, i.e. the intelligent device 2a/the intelligent device 2b.

The circle 6 and the circle 7 are circles plotted based on distance 1 between the intelligent device 1 and the intelligent device 2 and the distance 2 between the intelligent device 2 and the intelligent device 1 (which are determined by using a formula according to RSSI information of a point-to-point message received by the intelligent device 1 from the intelligent device 2, and RSSI information of a point-to-point message received by the intelligent device 2 from the intelligent device 1). The distance 1 and distance 2 are used for radius of respective circles, and location of the intelligent device 1 and location of the intelligent device 2 are used for center of respective circles.

The role of the fourth RSSI information is not to mix up the two combination, like if 1a and 2a are combined as one positive group, 1b and 2b will be excluded accordingly.

From the relative location map, relative position of an intelligent device to another intelligent device can be determined based on the fourth RSSI information. In an example, assuming the intelligent device 1 is located at the position 1a in the relative location map, it is determined that the intelligent device 2 is located at the position 2a rather than the position 2b in the relative location map. Thus, the fourth RSSI information can be used to identify a possible combination of positions of the at least two intelligent devices from the determined intersections of the at least two intelligent devices.

In this way, it is possible to determine relative position of the routing device, the mobile terminal, the intelligent device 1 and the intelligent device 2, that is, a combination of the routing device, the mobile terminal, the intelligent device 1a and the intelligent device 2a, or a combination of the routing device, the mobile terminal, the intelligent device 1b, and the intelligent device 2b.

In actual application scenario, the number of intelligent devices is not fixed, so when a new intelligent device is added to the local area network and the new intelligent device accesses to the routing device, it is able to perform positioning to achieve control and management of the new intelligent device. In another embodiment of the present disclosure, when positioning of a new intelligent device is required, the specific process may be as following step C to step E:

C: fifth RSSI information is acquired when a new intelligent device appears, wherein the fifth RSSI information is measured based on a point-to-point message sent by the new intelligent device;

D: sixth RSSI information reported by the mobile terminal is received, wherein the sixth RSSI information is measured based on a point-to-point message sent by the new intelligent device to the mobile terminal.

E: at least one seventh RSSI information reported by the new intelligent device is received, wherein at least one seventh RSSI information is measured based a point-to-point message sent by any one of the at least two intelligent devices to the new intelligent device; and positioning is performed based on the fifth RSSI information, the sixth RSSI information, the at least one seventh RSSI information, and a last positioning process.

The step C to step E are similar as those steps 301 to 304, positioning of a new intelligent device is performed based on RSSI information of point-to-point messages sent from the new intelligent device to respective positioned devices and in connection with a last positioning process.

The positioning can be achieved in two ways.

In first way, positioning of the new intelligent device is performed based on the fifth RSSI information, the sixth RSSI information, the at least one seventh RSSI information, and positioning result of the last positioning process.

The positioning result refers to a relative location map among the routing device, the mobile terminal and the at least two intelligent devices obtained by the last positioning. This way performs positioning of the new intelligent device by using the same method as that in the last positioning process with relative locations of the positioned devices being kept unchanged.

In the second way, positioning of the mobile terminal, the routing device, the at least two intelligent devices and the new intelligent device is determined based on the fifth RSSI information, the sixth RSSI information, the at least one seventh RSSI information, and positioning data acquired in the last positioning process.

The positioning data refer to the distance between the routing device and the mobile terminal, at least two distances between the routing device and the at least two intelligent devices, at least two distances between the mobile terminal and the at least two intelligent devices, at least one distance between any one of the at least two intelligent devices and the other intelligent device of the at least two intelligent devices acquired during the last positioning process. This way performs, in addition to positioning of the new intelligent device by using the same method as that in the last positioning process, adjustment of relative locations of the positioned devices. The specific positioning process is the same as the above steps 301 to 304, and will not be described again.

In the present embodiment, it is able to implement positioning accurately by collecting RSSI information of a point-to-point message between every two devices to be positioned, determining distance between every two devices to be positioned using the RSSI information, deriving a plurality of circles according to the distances, determining relative location among the devices based on intersections between the circles to obtain a relative location map.

In addition, when a new intelligent device appears, it is able to implement positioning of the new intelligent devices by collecting RSSI information of a point-to-point message between the new intelligent device and respective positioned device and determining distance between the new intelligent device and respective positioned device. The positioning may be implemented with any of the two discussed ways and so has higher flexibility.

At step 305, the relative location map is transmitted to the mobile terminal.

The routing device management APP installed on the mobile terminal can display the relative location map among the devices to be positioned. When the relative location map is displayed, identifier or device name and other information of each device may also be displayed on the relative location map.

In the present invention, it is the routing device that plots the relative position map and transmit it the mobile device.

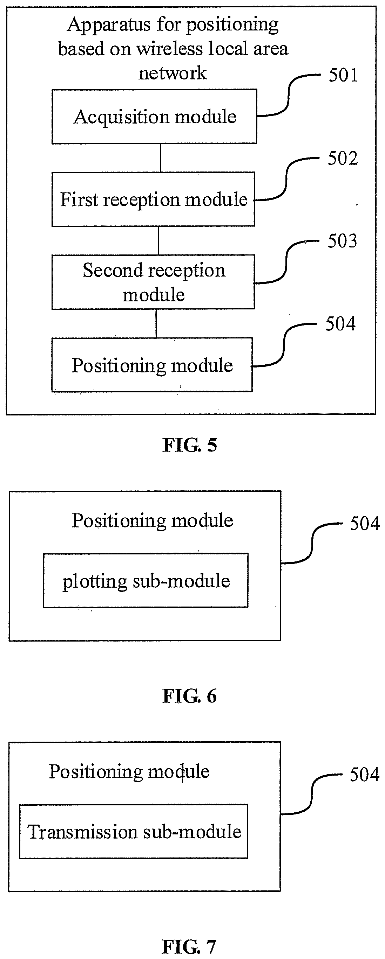

Figure 5 is a block diagram of a WLAN based positioning device according to an exemplary embodiment. As shown in Figure 5, the device includes an acquisition module 501, a first reception module 502, a second reception module 503, and a positioning module 504.

The acquisition module 501 is configured to acquire first RSSI information and at least two second RSSI information. The first RSSI information is measured based on a point-to-point message sent by a mobile terminal, and the at least two second RSSI information are measured based on point-to-point messages sent by at least two intelligent devices.

The first reception module 502 is configured to receive at least two third RSSI information reported by the mobile terminal. The at least two third RSSI information are measured based on point-to-point messages sent by the at least two intelligent devices to the mobile terminal.

The second reception module 503 is configured to receive at least one fourth RSSI information reported by any one of the at least two intelligent devices. The at least one fourth RSSI information being measured based on a point-to-point message sent by any one of the at least two intelligent devices to the other intelligent device of the at least two intelligent devices.

The positioning module 504 is configured to perform positioning of the mobile terminal, the routing device, and the at least two intelligent devices based on the first RSSI information, the at least two second RSSI information, the at least two third RSSI information, and the at least one fourth RSSI information.

In the present invention, as shown in Figure 6, the positioning module 504 includes a plotting sub-module configured to plot a relative location map based on the first RSSI information, the at least two second RSSI information, the at least two third RSSI information, and the at least one fourth RSSI information, and transmit the relative location map to the mobile terminal, wherein the relative location map indicates relative position between the mobile terminal, the routing device, and the at least two intelligent devices.

In some embodiments, the plotting sub-module may be configured to: determine a first distance between the routing device and the mobile terminal based on the first RSSI information, wherein any point on a first circle being location of the mobile terminal, center of first circle being location of the routing device, and radius of the first circle being the first distance; determine at least two second distances between the routing device and the at least two intelligent devices based on the at least two second RSSI information and determining at least two third distances between the mobile terminal and the at least two intelligent devices based on the at least two third RSSI information; wherein at least two intersections of at least two second circles and at least two third circles being possible locations of the at least two intelligent devices, center of each second circle being location of the routing device, radius of each of the at least two second circles being respective one of the at least two second distances, center of each of the at least two third circles being location of the mobile terminal and radius of each of the at least two third circles being respective one of the at least two third distances.

In some embodiments, the acquisition module 501 may be further configured to acquire fifth RSSI information when a new intelligent device appears, wherein the fifth RSSI information being measured based on a point-to-point message sent by the new intelligent device. The acquisition module 502 is further configured to acquire fifth RSSI information when a new intelligent device appears, wherein the fifth RSSI information being measured based on a point-to-point message sent by the new intelligent device. The second reception module 503 is further configured to receive at least one seventh RSSI information reported by the new intelligent device, wherein the at least one seventh RSSI information being measured based on a point-to-point message sent by any one of the at least two intelligent devices to the new intelligent device. The positioning module 504 is further configured to perform positioning based on the fifth RSSI information, the sixth RSSI information, the at least one seventh RSSI information, and a last positioning process.

In some embodiments, the positioning module 504 may be further configured to perform positioning of the new intelligent device based on the fifth RSSI information, the sixth RSSI information, the at least one seventh RSSI information, and positioning result of the last positioning process. Alternatively, the positioning module 504 is further configured to perform positioning of the mobile terminal, the routing device, the at least two intelligent devices and the new intelligent device based on the fifth RSSI information, the sixth RSSI information, the at least one seventh RSSI information, and positioning data acquired in the last positioning process.

With respect to the device in the above embodiment, the specific mode in which each module performs the operation has been described in detail in the embodiment relating to the method, and the description thereof will not be described in detail.

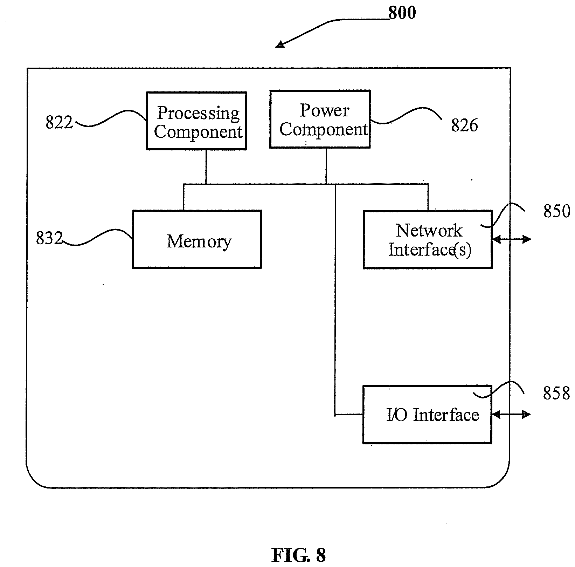

Figure 8 is a block diagram of a routing device 800 according to an exemplary embodiment. For example, the routing device 800 may be a wireless router. A shown in figure 8, the routing device 800 includes a processing component 822 (which includes one or more processors); a memory 832 representing memory resources, which is used for storing instructions, such as application programs, executable by the processing component 822. The application programs stored in the memory 832 may include one or more modules, each module of which corresponds to a set of instructions. Further, the processing component 822 may be configured to execute the instructions to perform the WLAN based positioning method.

The routing device 800 may also include: a power supply 826 configured to perform power management of the routing device 800; a wired or wireless network interface 850 configured to connect the routing device 800 to a network; an input/output (I/O) interfaces 858. The routing device 80 is optional based on an operating system stored in the memory 832, such as Windows Server™, Mac OS X™, Unix™, Linux™, FreeBSD™, or the like.

Other embodiments of the present disclosure will be readily apparent to those skilled in the art upon consideration of the specification and practice of the disclosure disclosed herein. The present application is intended to cover any variations, uses, or adaptations of the present disclosure that follow the general principles of the present disclosure and include the common general knowledge or conventional technical means in the art without departing from the present disclosure The specification and examples are to be regarded as illustrative only, and the true scope of the disclosure is indicated by the following claims.

It is to be understood that this disclosure is not limited to the precise constructions described above and shown in the accompanying drawings, and that various modifications and changes may be made without departing from the scope thereof. The scope of the present disclosure is limited only by the appended claims.

## Claims

1. A wireless local area network based positioning method implemented in a routing device, comprising:

   acquiring (101, 301) first Received Signal Strength Indicator, RSSI, information and at least two second RSSI information, wherein the first RSSI information being measured based on a point-to-point message sent by a mobile terminal, and the at least two second RSSI information being measured based on point-to-point messages sent by each of at least two intelligent devices, respectively;
   receiving (102, 302) at least two third RSSI information reported by the mobile terminal, wherein the at least two third RSSI information being measured based on point-to-point messages sent by each of the at least two intelligent devices to the mobile terminal, respectively;
   receiving (103, 303) at least one fourth RSSI information reported by one of the at least two intelligent devices, wherein the at least one fourth RSSI information being measured based on a point-to-point message sent by any one of the at least two intelligent devices to the other intelligent device of the at least two intelligent devices; and
   performing (104) positioning of the mobile terminal, the routing device, and the at least two intelligent devices based on the first RSSI information, the at least two second RSSI information, the at least two third RSSI information, and the at least one fourth RSSI information,
   wherein said performing (104) positioning of the mobile terminal, the routing device, and the at least two intelligent devices based on the first RSSI information, the at least two second RSSI information, the at least two third RSSI information, and the at least one fourth RSSI information comprises:

      deriving (304) a relative location map based on the first RSSI information, the at least two second RSSI information, the at least two third RSSI information, and the at least one fourth RSSI information, and transmitting (305)
the relative location map to the mobile terminal, wherein the relative location map indicates relative position between the mobile terminal, the routing device, and the at least two intelligent devices;
wherein the mobile terminal and the at least two intelligent devices are connected to the wireless local area network through the routing device.

2. The method according to claim 1, wherein said deriving (304) a relative location map based on the first RSSI information, the at least two second RSSI information, the at least two third RSSI information, and the at least one fourth RSSI information comprises:

determining a first distance between the routing device and the mobile terminal based on the first RSSI information, wherein any point on a first circle being location of the mobile terminal, center of the first circle being location of the routing device, and radius of the first circle being the first distance; and
determining at least two second distances between the routing device and the at least two intelligent devices based on the at least two second RSSI information and determining at least two third distances between the mobile terminal and the at least two intelligent devices based on the at least two third RSSI information;
wherein at least two intersections of at least two second circles and at least two third circles being possible locations of the at least two intelligent devices, center of each of at least two second circles being location of the routing device, radius of each of the at least two second circles being respective one of the at least two second distances, center of each of at least two third circles being location of the mobile terminal and radius of each of the at least two third circles being respective one of the at least two third distances.

3. The method according to claim 1, further comprising: determining relative position of an intelligent device to another intelligent device among the at least two intelligent devices according to the relative location map and based on the fourth RSSI information.

4. The method according to claim 1, wherein the method further comprises:

acquiring fifth RSSI information when a new intelligent device appears, wherein the fifth RSSI information being measured based on a point-to-point message sent by the new intelligent device;
receiving sixth RSSI information reported by the mobile terminal, wherein the sixth RSSI information being measured based on a point-to-point message sent by the new intelligent device to the mobile terminal;
receiving at least one seventh RSSI information reported by the new intelligent device, wherein the at least one seventh RSSI information being measured based on a point-to-point
message sent by any one of the at least two intelligent devices to the new intelligent device; and
performing positioning based on the fifth RSSI information, the sixth RSSI information, the at least one seventh RSSI information, and a last positioning process.

5. The method according to claim 4, wherein said performing positioning based on the fifth RSSI information, the sixth RSSI information, the at least one seventh RSSI information, and a last positioning process comprises:

performing positioning of the new intelligent device based on the fifth RSSI information, the sixth RSSI information, the at least one seventh RSSI information, and positioning result of the last positioning process; or
performing positioning of the mobile terminal, the routing device, the at least two intelligent devices and the new intelligent device based on the fifth RSSI information, the sixth RSSI information, the at least one seventh RSSI information, and positioning data acquired in the last positioning process.

6. A wireless local area network based positioning device, comprising:

an acquisition module (501) configured to acquire first Received Signal Strength Indicator, RSSI, information and at least two second RSSI information, wherein the first RSSI information being measured based on a point-to-point message sent by a mobile terminal, and the at least two second RSSI information being measured based on point-to-point messages sent by each of at least two intelligent devices, respectively;
a first reception module (502) configured to receive at least two third RSSI information reported by the mobile terminal, wherein the at least two third RSSI information being measured based on point-to-point messages sent by each of the at least two intelligent devices to the mobile terminal, respectively;
a second reception module (503) configured to receive at least one fourth RSSI information reported by one of the at least two intelligent devices, wherein the at least one fourth RSSI information being measured based on

a point-to-point message sent by any of the at least two intelligent devices to the other intelligent device of the at least two intelligent devices; and

a positioning module (504) configured to perform positioning of the mobile terminal, the routing device, and the at least two intelligent devices based on the first RSSI information, the at least two second RSSI information, the at least two third RSSI information, and the at least one fourth RSSI information,

wherein said positioning module comprises:

a plotting sub-module configured to plot a relative location map based on the first RSSI information, the at least two second RSSI information, the at least two third RSSI information, and the at least one fourth RSSI information, and transmit the relative location map to the mobile terminal, wherein the relative location map indicates relative position between the mobile terminal, the routing device, and the at least two intelligent devices;

wherein the mobile terminal and the at least two intelligent devices are connected to the wireless local area network through the wireless local area network based positioning device.

7. The device according to claim 6, wherein said plotting sub-module is configured to:

determine a first distance between the routing device and the mobile terminal based on the first RSSI information, wherein any point on a first circle being location of the mobile terminal, center of the first circle being location of the routing device, and radius of the first circle being the first distance; and

determine at least two second distances between the routing device and the at least two intelligent devices based on the at least two second RSSI information and determining at least two third distances between the mobile terminal and the at least two intelligent devices based on the at least two third RSSI information;

wherein at least two intersections of at least two second circles and at least two third circles being possible locations of the at least two intelligent devices, center of each of the at least two second circles being location of the routing device, radius of each of the at least two second circles being respective one of the at least two second distances, center of each of the at least two third circles being location of the mobile terminal and radius of each of the at least two third circles being the respective one of at least two third distances.

8. The device according to claim 6, wherein

the acquisition module (501) is further configured to acquire fifth RSSI information when a new intelligent device appears, wherein the fifth RSSI information being measured based on a point-to-point message sent by the new intelligent device;

the first reception module (502) is further configured to receive sixth RSSI information reported by the mobile terminal, wherein the sixth RSSI information being measured based on a point-to-point message sent by the new intelligent device to the mobile terminal;

the second reception module (503) is further configured to receive at least one seventh RSSI information reported by the new intelligent device, wherein the at least one seventh RSSI information being measured based on a point-to-point message sent by any one of the at least two intelligent devices to the new intelligent device; and

the positioning module (504) is further configured to perform positioning based on the fifth RSSI information, the sixth RSSI information, the at least one seventh RSSI information, and a last positioning process.

9. The device according to claim 8, wherein said positioning module (504) is further configured to:

perform positioning of the new intelligent device based on the fifth RSSI information, the sixth RSSI information, the at least one seventh RSSI information, and positioning result of the last positioning process; or

perform positioning of the mobile terminal, the routing device, the at least two intelligent devices and the new intelligent device based on the fifth RSSI information, the sixth RSSI information, the at least one seventh RSSI information, and positioning data acquired in the last positioning process.

10. The device according to claim 6, comprising:

a processor (822),

a memory (832) for storing instructions executable by the processor,

wherein the processor is configured to function as the modules according to any of the claims 6-9.

11. A computer program including instructions for executing the steps of a wireless local area network based positioning method according to any one of claims 1 to 5 when said program is executed by a computer.

12. A recording medium readable by a computer and having recorded thereon a computer program including instructions for executing the steps of a wireless local area network based positioning method according to any one of claims 1 to 5.

**Patentansprüche**

1. Auf drahtlosem lokalem Netzwerk basierendes Positionierungsverfahren, das in einer Routing-Vorrichtung implementiert ist und umfasst:

Erfassen (101, 301) erster Received-Signal-Strength-Indicator, RSSI, -Informationen und mindestens zwei zweiter RSSI-Informationen, wobei die ersten RSSI-Informationen basierend auf einer von einem mobilen Endgerät gesendeten Punkt-zu-Punkt-Nachricht gemessen werden, und die mindestens zwei zweiten RSSI-Informationen basierend auf Punkt-zu-Punkt-Nachrichten gemessen werden, die von jeder der mindestens zwei intelligenten Vorrichtungen gesendet werden;

Empfangen (102, 302) mindestens zwei dritter RSSI-Informationen, die von dem mobilen Endgerät übermittelt werden, wobei die mindestens zwei dritten RSSI-Informationen basierend auf Punkt-zu-Punkt-Nachrichten gemessen werden, die von jeder der mindestens zwei intelligenten Vorrichtungen an das mobile Endgerät gesendet werden;

Empfangen (103, 303) mindestens einer vierten RSSI-Information, die von einer der mindestens zwei intelligenten Vorrichtungen übermittelt wird, wobei die mindestens eine vierte RSSI-Information basierend auf einer Punkt-zu-Punkt-Nachricht gemessen wird, die von einer der mindestens zwei intelligenten Vorrichtungen an die jeweils andere intelligente Vorrichtung der mindestens zwei intelligenten Vorrichtungen gesendet wird; und

Durchführen (104) einer Positionierung des mobilen Endgeräts, der Routing-Vorrichtung und der mindestens zwei intelligenten Vorrichtungen basierend auf den ersten RSSI-Informationen, den mindestens zwei zweiten RSSI-Informationen, den mindestens zwei dritten RSSI-Informationen und der mindestens einen vierten RSSI-Information,

wobei das Durchführen (104) der Positionierung des mobilen Endgeräts, der Routing-Vorrichtung und der mindestens zwei intelligenten Vorrichtungen basierend auf den ersten RSSI-Informationen, den mindestens zwei zweiten RSSI-Informationen, den mindestens zwei dritten RSSI-Informationen und der mindestens einen vierten RSSI-Information umfasst:

Ableiten (304) eines relativen Lageplans basierend auf den ersten RSSI-Informationen, den mindestens zwei zweiten RSSI-Informationen, den mindestens zwei dritten RSSI-Informationen und der mindestens einen vierten RSSI-Information, und Senden (305) des relativen Lageplans an das mobile Endgerät, wobei der relative Lageplan die relative Position zwischen dem mobilen Endgerät, der Routing-Vorrichtung und den mindestens zwei intelligenten Vorrichtungen angibt;

wobei das mobile Endgerät und die mindestens zwei intelligenten Vorrichtungen durch die Routing-Vorrichtung mit dem drahtlosen lokalen Netzwerk verbunden sind.

2. Verfahren nach Anspruch 1, wobei das Ableiten (304) eines relativen Lageplans basierend auf den ersten RSSI-Informationen, den mindestens zwei zweiten RSSI-Informationen, den mindestens zwei dritten RSSI-Informationen und der mindestens einen vierten RSSI-Information umfasst:

Bestimmen einer ersten Entfernung zwischen der Routing-Vorrichtung und dem mobilen Endgerät basierend auf den ersten RSSI-Informationen, wobei jeder Punkt auf einem ersten Kreis der Standort des mobilen Endgeräts ist, die Mitte des ersten Kreises der Standort der Routing-Vorrichtung ist, und der Radius des ersten Kreises die erste Entfernung ist; und

Bestimmen von mindestens zwei zweiten Entfernungen zwischen der Routing-Vorrichtung und den mindestens zwei intelligenten Vorrichtungen basierend auf den mindestens zwei zweiten RSSI-Informationen, und Bestimmen von mindestens zwei dritten Entfernungen zwischen dem mobilen Endgerät und den mindestens zwei intelligenten Vorrichtungen basierend auf den mindestens zwei dritten RSSI-Informationen;

wobei mindestens zwei Schnittstellen von mindestens zwei zweiten Kreisen und mindestens zwei dritten Kreisen mögliche Standorte der mindestens zwei intelligenten Vorrichtungen sind, die Mitte jedes der mindestens zwei zweiten Kreise der Standort der Routing-Vorrichtung ist, der Radius jedes der mindestens zwei zweiten Kreise eine der mindestens zwei zweiten Entfernungen ist, die Mitte jedes der mindestens zwei dritten Kreise der Standort des mobilen Endgeräts ist und der Radius jedes der mindestens zwei dritten Kreise eine der mindestens zwei dritten Entfernungen ist.

3. Verfahren nach Anspruch 1, das ferner umfasst: Bestimmen der relativen Position einer intelligenten Vorrichtung zu einer anderen intelligenten Vorrichtungen unter den mindestens zwei intelligenten Vorrichtung entsprechend dem relativen Lageplan und basierend auf den vierten RSSI-Informationen.

4. Verfahren nach Anspruch 1, wobei das Verfahren ferner umfasst:

Erfassen fünfter RSSI-Informationen, wenn eine neue intelligente Vorrichtung auftritt, wobei die fünften RSSI-Informationen basierend auf einer von der neuen intelligenten Vorrichtung gesendeten Punkt-zu-Punkt-Nachricht gemessen werden;

Empfangen sechster RSSI-Informationen, die von dem mobilen Endgerät übermittelt werden, wobei die sechsten RSSI-Informationen basierend auf einer Punkt-zu-Punkt-Nachricht gemessen werden, die von der neuen intelligenten Vorrichtung an das mobile Endgerät gesendet wird;

Empfangen mindestens einer siebten RSSI-Information, die von der neuen intelligenten Vorrichtung übermittelt wird, wobei die mindestens eine siebte RSSI-Information basierend auf einer Punkt-zu-Punkt-Nachricht gemessen wird, die von einer der mindestens zwei intelligenten Vorrichtungen an die neue intelligente Vorrichtung gesendet wird; und

Durchführen einer Positionierung basierend auf den fünften RSSI-Informationen, den sechsten RSSI-Information, der mindestens einen siebten RSSI-Information und einem letzten Positionierungsvorgang.

5. Verfahren nach Anspruch 4, wobei das Durchführen der Positionierung basierend auf den fünften RSSI-Informationen, den sechsten RSSI-Informationen, der mindestens einen siebten RSSI-Information und einem letztem Positionierungsvorgang umfasst:

Durchführen einer Positionierung der neuen intelligenten Vorrichtung basierend auf den fünften RSSI-Informationen, den sechsten RSSI-Informationen, der mindestens einen siebten RSSI-Information und dem Positionierungsergebnis des letzten Positionierungsvorgangs; oder

Durchführen einer Positionierung des mobilen Endgeräts, der Routing-Vorrichtung, der mindestens zwei intelligenten Vorrichtungen und der neuen intelligenten Vorrichtung basierend auf den fünften RSSI-Informationen, den sechsten RSSI-Informationen, der mindestens einen siebten RSSI-Information und den im letzten Positionierungsvorgang erfassten Positionierungsdaten.

6. Auf drahtlosem lokalem Netzwerk basierende Positionierungsvorrichtung, die aufweist:

ein Erfassungsmodul (501), das dazu ausgebildet ist, erste Received-Signal-Strength-Indicator, RSSI, -Informationen und mindestens zwei zweite RSSI-Informationen zu erfassen, wobei die ersten RSSI-Informationen basierend auf einer von einem mobilen Endgerät gesendeten Punkt-zu-Punkt-Nachricht gemessen werden, und die mindestens zwei zweiten RSSI-Informationen basierend auf Punkt-zu-Punkt-Nachrichten gemessen werden, die von jeder der mindestens zwei intelligenten Vorrichtungen gesendet werden;

ein erstes Empfangsmodul (502), das dazu ausgebildet ist, mindestens zwei dritte RSSI-Informationen zu empfangen, die von dem mobilen Endgerät übermittelt werden, wobei die mindestens zwei dritten RSSI-Informationen basierend auf Punkt-zu-Punkt-Nachrichten gemessen werden, die von jeder der mindestens zwei intelligenten Vorrichtungen an das mobile Endgerät gesendet werden;

ein zweites Empfangsmodul (503), das dazu ausgebildet ist, mindestens eine vierte RSSI-Information zu empfangen, die von einer der mindestens zwei intelligenten Vorrichtungen übermittelt wird, wobei die mindestens eine vierte RSSI-Information basierend auf einer Punkt-zu-Punkt-Nachricht gemessen wird, die von einer der mindestens zwei intelligenten Vorrichtungen an die jeweils andere intelligente Vorrichtung der mindestens zwei intelligenten Vorrichtungen gesendet wird; und

ein Positionierungsmodul (504), das dazu ausgebildet ist, eine Positionierung des mobilen Endgeräts, der Routing-Vorrichtung und der mindestens zwei intelligenten Vorrichtungen basierend auf den ersten RSSI-Informationen, den mindestens zwei zweiten RSSI-Informationen, den mindestens zwei dritten RSSI-Informationen und der mindestens einen vierten RSSI-Information durchzuführen, wobei das Positionierungsmodul aufweist:

ein Auswertesubmodul, das dazu ausgebildet ist, einen relativen Lageplan basierend auf den ersten RSSI-Informationen, den mindestens zwei zweiten RSSI-Informationen, den mindestens zwei dritten RSSI-Informationen und der mindestens einen vierten RSSI-Information auszuwerten und den relativen Lageplan an das mobile Endgerät zu senden, wobei der relative Lageplan die relative Position zwischen dem mobilen Endgerät, der Routing-Vorrichtung den mindestens zwei intelligenten Vorrichtungen angibt;

wobei das mobile Endgerät und die mindestens zwei intelligenten Vorrichtungen durch die auf drahtlosem lokalen Netzwerk basierende Positioniervorrichtung mit dem drahtlosen lokalen Netzwerk verbunden sind.

7. Vorrichtung nach Anspruch 6, wobei das Auswertesubmodul ausgebildet ist zum:

Bestimmen einer ersten Entfernung zwischen der Routing-Vorrichtung und dem mobilen Endgerät basierend auf den ersten RSSI-Informationen, wobei jeder Punkt auf einem ersten Kreis der Standort des mobilen Endgeräts ist, die Mitte des ersten Kreises der Standort der Routing-Vorrichtung ist, und der Radius des ersten Kreises die erste Entfernung ist; und

Bestimmen von mindestens zwei zweiten Entfernungen zwischen der Routing-Vorrichtung und den mindestens zwei intelligenten Vorrichtungen basierend auf den mindestens zwei zweiten RSSI-Informationen, und Bestimmen von mindestens zwei dritten Entfernungen zwischen dem mobilen Endgerät und den mindestens zwei intelligenten Vorrichtungen basierend auf den mindestens zwei dritten RSSI-Informationen;

wobei mindestens zwei Schnittstellen von mindestens zwei zweiten Kreisen und mindestens zwei dritten Kreisen mögliche Standorte der mindestens zwei intelligenten Vorrichtungen sind, die Mitte jedes der mindestens zwei zweiten Kreise der Standort der Routing-Vorrichtung ist, der Radius jedes der mindestens zwei zweiten Kreise eine der mindestens zwei zweiten Entfernungen ist, die Mitte jedes der mindestens zwei dritten Kreise der Standort des mobilen Endgeräts ist und der Radius jedes der mindestens zwei dritten Kreise eine der mindestens zwei dritten Entfernungen ist.

8. Vorrichtung nach Anspruch 6, wobei

das Erfassungsmodul (501) ferner dazu ausgebildet ist, die fünften RSSI-Informationen zu erfassen, wenn eine neue intelligente Vorrichtung auftritt, wobei die fünften RSSI-Informationen basierend auf einer von der neuen intelligenten Vorrichtung gesendeten Punkt-zu-Punkt-Nachrichten gemessen werden;

das erste Empfangsmodul (502) ferner dazu ausgebildet ist, sechste RSSI-Informationen zu empfangen, die von dem mobilen Endgerät übermittelt werden, wobei die sechsten RSSI-Informationen basierend auf einer Punkt-zu-Punkt-Nachricht gemessen werden, die von der neuen intelligenten Vorrichtung an das mobile Endgerät gesendet wird;

das zweite Empfangsmodul (503) ferner dazu ausgebildet ist, mindestens eine siebte RSSI-Information zu empfangen, die von der neuen intelligenten Vorrichtung übermittelt wird, wobei die mindestens eine siebte RSSI-Information basierend auf einer Punkt-zu-Punkt-Nachricht gemessen wird, die von einer der mindestens zwei intelligenten Vorrichtungen an die neue intelligente Vorrichtung gesendet wird; und

das Positionierungsmodul (504) ferner dazu ausgebildet ist, eine Positionierung basierend auf den fünften RSSI-Informationen, den sechsten RSSI-Information, der mindestens einen siebten RSSI-Information, und einem letzten Positionierungsvorgang durchzuführen.

9. Vorrichtung nach Anspruch 8, wobei das Positionierungsmodul (504) ferner ausgebildet ist zum:

Durchführen einer Positionierung der neuen intelligenten Vorrichtung basierend auf den fünften RSSI-Informationen, den sechsten RSSI-Informationen, der mindestens einen siebten RSSI-Information und dem Positionierungsergebnis des letzten Positionierungsvorgangs; oder

Durchführen einer Positionierung des mobilen Endgeräts, der Routing-Vorrichtung, der mindestens zwei intelligenten Vorrichtungen und der neuen intelligenten Vorrichtung basierend auf den fünften RSSI-Informationen, den sechsten RSSI-Informationen, der mindestens einen siebten RSSI-Information und im letzten Positionierungsvorgang erfassten Positionierungsdaten.

10. Vorrichtung nach Anspruch 6, die aufweist:

einen Prozessor (822),
einen Speicher (823) zum Speicher von Instruktionen, die von dem Prozessor ausgeführt werden können, wobei der Prozessor so ausgebildet ist, dass er als die Module nach einem der Ansprüche 6-9 fungiert.

11. Computerprogramm, das Instruktionen zum Ausführen der Schritte eines auf drahtlosem lokalem Netzwerk basierendem Positionierungsverfahrens nach einem der Ansprüche 1 bis 5 aufweist, wenn das Programm von einem Computer ausgeführt wird.

**12.** Aufzeichnungsmedium, das von einem Computer lesbar ist und auf dem ein Computerprogramm aufgezeichnet ist, das Instruktionen zum Ausführen der Schritte eines auf drahtlosem lokalem Netzwerk basierendem Positionierungsverfahrens nach einem der Ansprüche 1 bis 5 aufweist.

**Revendications**

**1.** Procédé de positionnement basé sur un réseau local sans fil mis en oeuvre dans un dispositif de routage, comprenant :

l'acquisition (101, 301) d'une première information d'indicateur d'intensité du signal reçu, RSSI, et d'au moins deux deuxièmes informations RSSI, la première information RSSI étant mesurée sur la base d'un message point à point envoyé par un terminal mobile, et les au moins deux deuxièmes informations RSSI étant mesurées sur la base de messages point à point envoyés par chacun d'au moins deux dispositifs intelligents, respectivement ;
la réception (102, 302) d'au moins deux troisièmes informations RSSI rapportées par le terminal mobile, les au moins deux troisièmes informations RSSI étant mesurées sur la base de messages point à point envoyés par chacun des au moins deux dispositifs intelligents au terminal mobile, respectivement ;
la réception (103, 303) d'au moins une quatrième information RSSI rapportée par l'un des au moins deux dispositifs intelligents, l'au moins une quatrième information RSSI étant mesurée sur la base d'un message point à point envoyé par l'un quelconque des au moins deux dispositifs intelligents à l'autre dispositif intelligent des au moins deux dispositifs intelligents ; et
le fait d'effectuer (104) le positionnement du terminal mobile, du dispositif de routage et des au moins deux dispositifs intelligents sur la base de la première information RSSI, des au moins deux deuxièmes informations RSSI, des au moins deux troisièmes informations RSSI et de l'au moins une quatrième information RSSI,
ledit fait d'effectuer (104) un positionnement du terminal mobile, du dispositif de routage et des au moins deux dispositifs intelligents sur la base de la première information RSSI, des au moins deux deuxièmes informations RSSI, des au moins deux troisièmes informations RSSI et de l'au moins une quatrième information RSSI comprenant :

la dérivation (304) d'une carte d'emplacement relative sur la base de la première information RSSI, des au moins deux deuxièmes informations RSSI, des au moins deux troisièmes informations RSSI et de l'au moins une quatrième information RSSI, et la transmission (305) de la carte d'emplacement relative au terminal mobile, la carte d'emplacement relative indiquant la position relative entre le terminal mobile, le dispositif de routage et les au moins deux dispositifs intelligents ;
le terminal mobile et les au moins deux dispositifs intelligents étant connectés au réseau local sans fil par le biais du dispositif de routage.

**2.** Procédé selon la revendication 1, dans lequel ladite dérivation (304) d'une carte d'emplacement relative sur la base de la première information RSSI, des au moins deux deuxièmes informations RSSI, des au moins deux troisièmes informations RSSI et de l'au moins une quatrième information RSSI comprend :

la détermination d'une première distance entre le dispositif de routage et le terminal mobile sur la base de la première information RSSI, tout point sur un premier cercle étant l'emplacement du terminal mobile, le centre du premier cercle étant l'emplacement du dispositif de routage, et le rayon du premier cercle étant la première distance ; et
la détermination d'au moins deux deuxièmes distances entre le dispositif de routage et les au moins deux dispositifs intelligents sur la base des au moins deux deuxièmes informations RSSI et la détermination d'au moins deux troisièmes distances entre le terminal mobile et les au moins deux dispositifs intelligents sur la base des au moins deux troisièmes informations RSSI ;
au moins deux intersections d'au moins deux deuxièmes cercles et d'au moins deux troisièmes cercles étant des emplacements possibles des au moins deux dispositifs intelligents, le centre de chacun d'au moins deux deuxièmes cercles étant l'emplacement du dispositif de routage, le rayon de chacun des au moins deux deuxièmes cercles étant une distance respective des au moins deux deuxièmes distances, le centre de chacun d'au moins deux troisièmes cercles étant l'emplacement du terminal mobile et le rayon de chacun des au moins deux troisièmes cercles étant une distance respective des au moins deux troisièmes distances.

**3.** Procédé selon la revendication 1, comprenant en outre : la détermination d'une position relative d'un dispositif intelligent par rapport à un autre dispositif intelligent parmi les au moins deux dispositifs intelligents selon la carte d'emplacement relative et sur la base des quatrièmes informations RSSI.

4. Procédé selon la revendication 1, dans lequel le procédé comprend en outre :

l'acquisition d'une cinquième information RSSI lorsqu'un nouveau dispositif intelligent apparaît, la cinquième information RSSI étant mesurée sur la base d'un message point à point envoyé par le nouveau dispositif intelligent ;

la réception d'une sixième information RSSI rapportées par le terminal mobile, la sixième information RSSI étant mesurée sur la base d'un message point à point envoyé par le nouveau dispositif intelligent au terminal mobile ;

la réception d'au moins une septième information RSSI rapportée par le nouveau dispositif intelligent, l'au moins une septième information RSSI étant mesurée sur la base d'un message point à point envoyé par l'un quelconque des au moins deux dispositifs intelligents au nouveau dispositif intelligent ; et

le fait d'effectuer un positionnement sur la base de la cinquième information RSSI, de la sixième informations RSSI, de l'au moins une septième information RSSI et d'un dernier processus de positionnement.

5. Procédé selon la revendication 4, dans lequel ledit fait d'effectuer un positionnement sur la base de la cinquième information RSSI, de la sixième informations RSSI, de l'au moins une septième information RSSI et d'un dernier processus de positionnement comprend :

le fait d'effectuer un positionnement du nouveau dispositif intelligent sur la base de la cinquième informations RSSI, de la sixième information RSSI, de l'au moins une septième information RSSI et du résultat de positionnement du dernier processus de positionnement ; ou

le fait d'effectuer un positionnement du terminal mobile, du dispositif de routage, des au moins deux dispositifs intelligents et du nouveau dispositif intelligent sur la base de la cinquième information RSSI, de la sixième informations RSSI, de l'au moins une septième information RSSI et des données de positionnement acquises dans le dernier processus de positionnement.

6. Dispositif de positionnement basé sur un réseau local sans fil, comprenant :

un module d'acquisition (501) configuré pour acquérir une première information d'indicateur d'intensité du signal reçu, RSSI, et au moins deux deuxièmes informations RSSI, la première information RSSI étant mesurée sur la base d'un message point à point envoyé par un terminal mobile, et les au moins deux deuxièmes informations RSSI étant mesurées sur la base de messages point à point envoyés par chacun d'au moins deux dispositifs intelligents, respectivement ;

un premier module de réception (502) configuré pour recevoir au moins deux troisièmes informations RSSI rapportées par le terminal mobile, les au moins deux troisièmes informations RSSI étant mesurées sur la base de messages point à point envoyés par chacun des au moins deux dispositifs intelligents au terminal mobile, respectivement ;

un second module de réception (503) configuré pour recevoir au moins une quatrième information RSSI rapportée par l'un des au moins deux dispositifs intelligents, l'au moins une quatrième information RSSI étant mesurée sur la base d'un message point à point envoyé par l'un quelconque des au moins deux dispositifs intelligents à l'autre dispositif intelligent des au moins deux dispositifs intelligents ; et

un module de positionnement (504) configuré pour effectuer le positionnement du terminal mobile, du dispositif de routage et des au moins deux dispositifs intelligents sur la base de la première information RSSI, des au moins deux deuxièmes informations RSSI, des au moins deux troisièmes informations RSSI et de l'au moins une quatrième information RSSI,

ledit module de positionnement comprenant :

un sous-module de traçage configuré pour tracer une carte d'emplacement relative sur la base de la première information RSSI, des au moins deux deuxièmes informations RSSI, des au moins deux troisièmes informations RSSI et de l'au moins une quatrième information RSSI, et transmettre la carte d'emplacement relative au terminal mobile, la carte d'emplacement relative indiquant la position relative entre le terminal mobile, le dispositif de routage et les au moins deux dispositifs intelligents ;

le terminal mobile et les au moins deux dispositifs intelligents étant connectés au réseau local sans fil par le biais du dispositif de positionnement sur la base du réseau local sans fil.

**7.** Dispositif selon la revendication 6, dans lequel ledit sous-module de traçage est configuré pour :

déterminer une première distance entre le dispositif de routage et le terminal mobile sur la base de la première informations RSSI, tout point sur un premier cercle étant l'emplacement du terminal mobile, le centre du premier cercle étant l'emplacement du dispositif de routage, et le rayon du premier cercle étant la première distance ; et déterminer au moins deux deuxièmes distances entre le dispositif de routage et les au moins deux dispositifs intelligents sur la base des au moins deux deuxièmes informations RSSI et déterminer au moins deux troisièmes distances entre le terminal mobile et les au moins deux dispositifs intelligents sur la base des au moins deux troisièmes informations RSSI ;

au moins deux intersections d'au moins deux deuxièmes cercles et d'au moins deux troisièmes cercles étant des emplacements possibles des au moins deux dispositifs intelligents, le centre de chacun des au moins deux deuxièmes cercles étant l'emplacement du dispositif de routage, le rayon de chacun des au moins deux deuxièmes cercles étant une distance respective des au moins deux deuxièmes distances, le centre de chacun des au moins deux troisièmes cercles étant l'emplacement du terminal mobile et le rayon de chacun des au moins deux troisièmes cercles étant la distance respective d'au moins deux troisièmes distances.

**8.** Dispositif selon la revendication 6, dans lequel

le module d'acquisition (501) est en outre configuré pour acquérir une cinquième informations RSSI lorsqu'un nouveau dispositif intelligent apparaît, la cinquième information RSSI étant mesurée sur la base d'un message point à point envoyé par le nouveau dispositif intelligent ;

le premier module de réception (502) est en outre configuré pour recevoir la sixième information RSSI rapportée par le terminal mobile, la sixième information RSSI étant mesurée sur la base d'un message point à point envoyé par le nouveau dispositif intelligent au terminal mobile ;

le second module de réception (503) est en outre configuré pour recevoir au moins une septième information RSSI rapportée par le nouveau dispositif intelligent, l'au moins une septième information RSSI étant mesurée sur la base d'un message point à point envoyé par l'un quelconque des au moins deux dispositifs intelligents au nouveau dispositif intelligent ; et

le module de positionnement (504) est en outre configuré pour effectuer un positionnement sur la base de la cinquième informations RSSI, de la sixième information RSSI, de l'au moins une septième information RSSI et d'un dernier processus de positionnement.

**9.** Dispositif selon la revendication 8, dans lequel ledit module de positionnement (504) est en outre configuré pour :

effectuer le positionnement du nouveau dispositif intelligent sur la base de la cinquième informations RSSI, de la sixième informations RSSI, de l'au moins une septième information RSSI et du résultat de positionnement du dernier processus de positionnement ; ou

effectuer le positionnement du terminal mobile, du dispositif de routage, des au moins deux dispositifs intelligents et du nouveau dispositif intelligent sur la base de la cinquième information RSSI, de la sixième information RSSI, de l'au moins une septième information RSSI et des données de positionnement acquises dans le dernier processus de positionnement.

**10.** Dispositif selon la revendication 6, comprenant :

un processeur (822),
une mémoire (832) pour stocker des instructions exécutables par le processeur,
le processeur étant configuré pour fonctionner comme les modules selon l'une quelconque des revendications 6 à 9.

**11.** Programme informatique comportant des instructions pour exécuter les étapes d'un procédé de positionnement sur la base d'un réseau local sans fil selon l'une quelconque des revendications 1 à 5 lorsque ledit programme est exécuté par un ordinateur.

**12.** Support d'enregistrement lisible par un ordinateur et sur lequel est enregistré un programme informatique comportant des instructions pour exécuter les étapes d'un procédé de positionnement sur la base d'un réseau local sans fil selon l'une quelconque des revendications 1 à 5.

acquiring first RSSI information and at least one second RSSI information, wherein the first RSSI information being measured based on a point-to-point message sent by a mobile terminal, and the at least one second RSSI information being measured based on a point-to-point message sent by at least one intelligent device

— 101

receive at least one third RSSI information reported by the mobile terminal, wherein the at least one third RSSI information being measured based on a point-to-point message sent by the at least one intelligent device to the mobile terminal

— 102

receiving at least one fourth RSSI information reported by the at least one intelligent device, wherein the at least one fourth RSSI information being measured based on a point-to-point message sent by any of the at least one intelligent device to other intelligent devices

— 103

performing positioning of the mobile terminal, the routing device, and the at least one intelligent device based on the first RSSI information, the at least one second RSSI information, the at least one third RSSI information, and the at least one fourth RSSI information

— 104

**FIG. 1**

203

201

202

Intelligent device 1

203

Intelligent device 2

**FIG. 2**

acquiring first RSSI information and at least one second RSSI information, wherein the first RSSI information being measured based on a point-to-point message sent by a mobile terminal, and the at least one second RSSI information being measured based on a point-to-point message sent by at least one intelligent device — 301

receive at least one third RSSI information reported by the mobile terminal, wherein the at least one third RSSI information being measured based on a point-to-point message sent by the at least one intelligent device to the mobile terminal — 302

receiving at least one fourth RSSI information reported by the at least one intelligent device, wherein the at least one fourth RSSI information being measured based on a point-to-point message sent by any of the at least one intelligent device to other intelligent devices — 303

plotting a relative location map based on the first RSSI information, the at least one second RSSI information, the at least one third RSSI information, and the at least one fourth RSSI information, wherein the relative position map indicates relative position between the mobile terminal, the routing device, and the at least one intelligent device — 304

transmitting the relative location map to the mobile terminal — 305

FIG. 3

**FIG. 4**

Apparatus for positioning
based on wireless local area
network — 501

Acquisition module

— 502

First reception module

— 503

Second reception
module

— 504

Positioning module

**FIG. 5**

Positioning module — 504

plotting sub-module

**FIG. 6**

Positioning module — 504

Transmission sub-module

**FIG. 7**

**FIG. 8**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013053061 A1